# EUROPEAN PATENT APPLICATION

(11) **EP 3 756 955 A1**
(43) Date of publication of application: **30.12.2020**
(21) Application number: 20178995.5
(22) Date of filing: 09.06.2020
(51) Int. Cl.: B60R 9/10

(54) **SECURING DEVICE FOR SECURING BICYCLE CARRY RACK TO VEHICLE HITCH**

(30) Priority: 28.06.2019 TW 108122865
(71) Applicant: King Rack Industrial Co., Ltd., Taichung City (TW)
(72) Inventor: Wang, Chiu-Kuei, Taichung City (TW)
(74) Representative: Cabinet Chaillot

(57) **Abstract**

A securing device for securing a bicycle carry rack to a vehicle hitch includes a reception portion (11) and a connection portion (12) which is radially connected to the reception portion (11). The reception portion (11) is mounted to the vehicle hitch (21), and the connection portion (12) is connected to the bicycle carry rack (31). The reception portion (11) has a clamping unit (14) extending therefrom. The clamping unit (14) is located opposite to the connection portion (12) and includes two lugs (14A) which extend radially from the reception portion (11). An adjustable area (141) is formed between the two lugs (14A). Each lug (14A) includes a hole (142). A fastener (51) extends through the holes (142) of the two lugs (14A) and is connected with a washer (52) and a nut (53). The nut (53) is threadedly connected to the fastener (51) to control the distance "D" between the two lugs (14A).

## Description

### BACKGROUND OF THE INVENTION

### 1. Fields of the invention

The present invention relates to a securing device for securing a bicycle carry rack to a vehicle hitch.

### 2. Descriptions of Related Art

The conventional securing device for securing a bicycle carry rack to a vehicle hitch generally includes an upright control unit and a transverse control unit to ensure that the bicycle carry rack is secured to a vehicle hitch. The upright control unit includes a rod which is pulled upward to close the clamping pieces so as to clamp the hitch ball between the clamping pieces. When releasing the transverse force of the transverse control unit and the upright force of the upright control unit, the rod is disengaged from the clamping unit, such that the bicycle carry rack is secured in two directions.

However, the transverse control unit includes a protrusion which is located on the other side of the clamping unit and has higher manufacturing cost. Besides, if the user locks the transverse control unit with a large force, the protrusion may not successfully return.

The present invention intends to provide a securing device for securing a bicycle carry rack to a vehicle hitch, and the securing device eliminates the shortcomings mentioned above.

### SUMMARY OF THE INVENTION

The present invention relates to a securing device for securing a bicycle carry rack to a vehicle hitch, and the securing device comprises a reception portion which is adapted to be mounted to the vehicle hitch, and a connection portion is radially connected to the reception portion and adapted to be connected to the bicycle carry rack. The reception portion includes a clamping unit extending therefrom, and the clamping unit located opposite to the connection portion and includes two lugs which extend radially from the reception portion. An adjustable area is formed between the two lugs, and each lug includes a hole. A fastener extends through the holes of the two lugs and is connected with a washer and a nut. The nut is threadedly connected to the fastener to control the distance between the two lugs.

Preferably, one of the two lugs includes a polygonal recess defined in the outside thereof. The fastener includes a head, a protrusion and a threaded portion. The protrusion protrudes from the inside of the head and is shaped to be engaged with the polygonal recess when the fastener extends through the two lugs. The washer and the nut are located corresponding to another of the two lugs. The washer is mounted to the fastener and the nut is threadedly connected to the threaded portion of the fastener.

Preferably, the lug that is located away from the head of the fastener includes a first friction face on the outside thereof. The washer includes a second friction face which contacts the first friction face.

Preferably, a T-shaped adjustment member is located within the adjustable area and includes an installation portion, a fixed portion extending from an underside of the installation portion, and a movable portion, the installation portion includes a rail and the movable portion is movable along the rail, the movable portion is located parallel to the fixed portion and movable relative to the fixed portion.

Preferably, the washer and the nut are accommodated in a room in a cylindrical tube. The cylindrical tube includes an opening which communicates with the room. A wrench is located in the cylindrical tube and engaged with the nut. A handle of the wrench extends out from the opening of the cylindrical tube so as to rotate the nut relative to the fastener. A stop extends inward from the inside of the cylindrical tube and located close to the opening of the cylindrical tube so as to stop the wrench from dropping off from the cylindrical tube.

Preferably, a spring is biased between the wrench and the nut.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the securing device of the present invention;
Fig. 2 is an exploded view of the securing device of the present invention;
Fig. 3 is another exploded view of the securing device of the present invention;
Fig. 3-1 shows an end view of the adjustment member of the securing device of the present invention;
Fig. 4 is a partial cross sectional view to show the fastening member extend through the two lugs and connected with the nut;
Fig. 4-1 shows the movement of the movable portion of the adjustment member of the securing device of the present invention, and
Fig. 5 shows that the nut and the washer are accommodated in the cylindrical tube, and the wrench is mounted to the nut.

### DETAILED DESCRIPTION OF THE PREFERRED EMBODIMENT

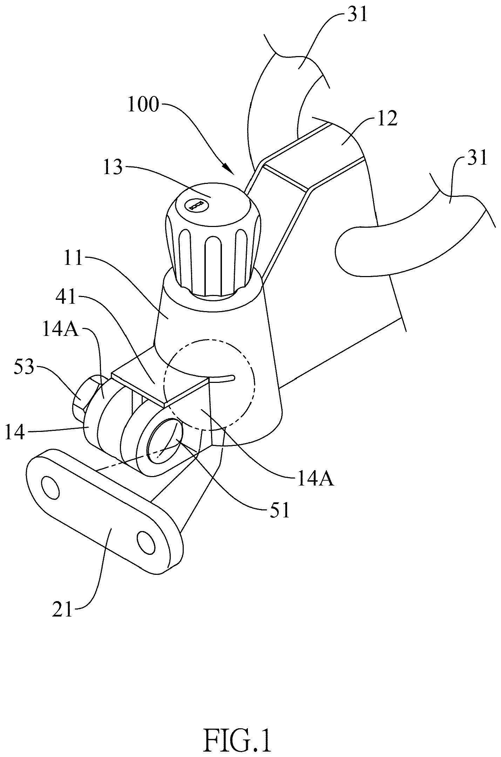

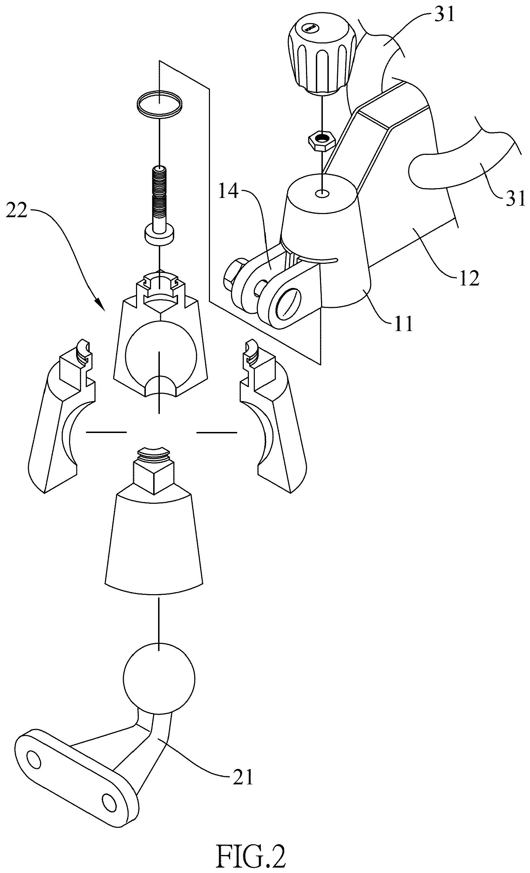

Referring to Figs. 1, 2, 3, 3-1, 4, and 4-1, the securing device 100 for securing a bicycle carry rack 31 to a vehicle hitch 21 of the present invention comprises a reception portion 11 and a connection portion 12 which is radially connected to the reception portion 11. A holding member 22 is composed of multiple clamping plates as shown in Fig. 2 and the clamping plates are operated to clamp the vehicle hitch 21 by operating an operation member 13 located on the top of the reception portion 11. The holding member 22 is accommodated within the reception portion 11 which holds the holding member 22 by a clamping unit 14. The connection portion 12 is connected to the bicycle carry rack 31.

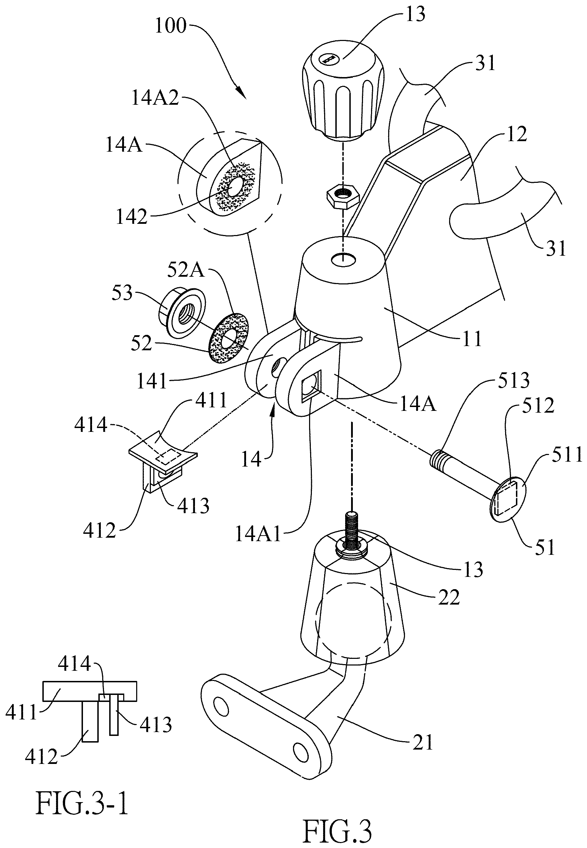

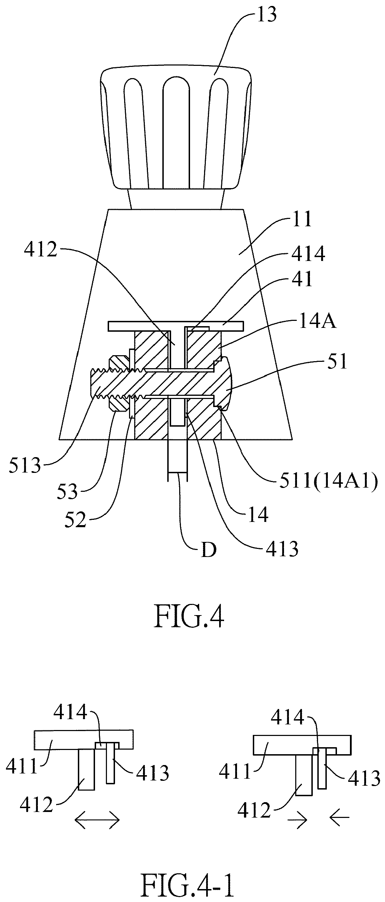

As shown in Figs. 3, 3-1, 4, and 4-1, the clamping unit 14 extends from the reception portion 11, and is located opposite to the connection portion 12. The clamping unit 14 includes two lugs 14A which extend radially from the reception portion 11. An adjustable area 141 is formed between the two lugs 14A and is adjustable. Each lug 14A includes a hole 142. One of the two lugs 14A includes a polygonal recess 14A1 defined in the outside thereof. A T-shaped adjustment member 41 is located within the adjustable area 141 for adjusting the distance "D" between the two lugs 14A. A fastener 51 extends through the holes 142 of the two lugs 14A and is connected with a washer 52 and a nut 53. Specifically, the fastener 51 includes a head 511, a protrusion 512, a shank extending from the head 511 and a threaded portion 513 that is formed to the distal end of the shank. The protrusion 512 protrudes from the inside of the head 511 and is shaped to be engaged with the polygonal recess 14A1 when the fastener 51 extends through the two lugs 14A. The washer 52 and the nut 53 are located corresponding to another of the two lugs 14A. The washer 52 is mounted to the fastener 51 and the nut 53 is threadedly connected to the threaded portion 513 of the fastener 51 so as to control the distance "D" between the two lugs 14A. The engagement between the protrusion 512 of the head 511 of the fastener 51 and the polygonal recess 14A1 ensure that the fastener 51 does not rotated when rotatably connecting the nut 53 to the threaded portion 513 of the fastener 51.

As shown in Fig. 3, the lug 14A that is located away from the head 511 of the fastener 51 includes a first friction face 14A2 on the outside thereof, and the washer 52 includes a second friction face 52A which contacts the first friction face 14A2 to provide more secure feature between the fastener 51 and the lugs 14A.

The adjustment member 41 is a T-shaped member and includes an installation portion 411, a fixed portion 412 extending from the underside of the installation portion 411, and a movable portion 413 which is located next to the fixed portion 412. The installation portion 411 includes a rail 414 and the movable portion 413 is movable along the rail 414. In this embodiment, the movable portion 413 is parallel to the fixed portion 412 and movable relative to the fixed portion 412. By moving the movable portion 413 relative to the fixed portion 412, the distance "D" of the clamping unit 14 to prevent from damaging the holding member 22 or the reception portion 11 by inappropriate installation.

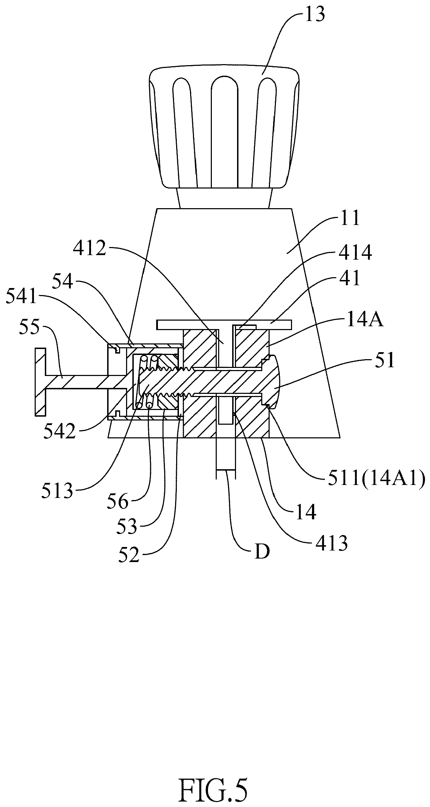

As shown in Fig. 5, in one embodiment, a cylindrical tube 54 is connected to one of the two lugs 14A. The washer 52 and the nut 53 are accommodated in a room 542 defined in the cylindrical tube 54. The cylindrical tube 54 includes an opening which communicates with the room 542. A wrench 55 is located in the cylindrical tube 54 and engaged with the nut 53. A handle of the wrench 55 extends out from the opening of the cylindrical tube 54 such that the users can easily operate the wrench 55 to rotate the nut 53 relative to the fastener 51. A stop 541 extends inward from the inside of the cylindrical tube 54 and is located close to the opening of the cylindrical tube 54 so as to stop the wrench 55 from dropping off from the cylindrical tube 54. Preferably, a spring 56 is biased between the wrench 55 and the nut 53. The spring 56 remove the wrench 55 from the nut 53 to prevent the nut 53 from being unintentionally rotated.

While we have shown and described the embodiment in accordance with the present invention, it should be clear to those skilled in the art that further embodiments may be made without departing from the scope of the present invention.

## Claims

1. A securing device for securing a bicycle carry rack to a vehicle hitch, comprising:
a reception portion (11) adapted to be mounted to the vehicle hitch (21), a connection portion (12) radially connected to the reception portion (11) and adapted to be connected to the bicycle carry rack (31), the reception portion (11) having a clamping unit (14) extending therefrom, the clamping unit (14) located opposite to the connection portion (12) and including two lugs (14A) which extend radially from the reception portion (11), an adjustable area (141) formed between the two lugs (14A), each lug (14A) including a hole (142), and
a fastener (51) extending through the holes (142) of the two lugs (14A) and connected with a washer (52) and a nut (53), the nut (53) threadedly connected to the fastener (51) to control a distance "D" between the two lugs (14A).

2. The securing device as claimed in claim 1, wherein one of the two lugs (14A) includes a polygonal recess (14A1) defined in an outside thereof, the fastener (51) includes a head (511), a protrusion (512) and a threaded portion (513), the protrusion (512) protrudes from an inside of the head (511) and is shaped to be engaged with the polygonal recess (14A1) when the fastener (51) extends through the two lugs (14A), the washer (52) and the nut (53) are located corresponding to another of the two lugs (14A), the washer (52) is mounted to the fastener (51) and the nut (53) threadedly connected to the threaded portion (513) of the fastener (51).

3. The securing device as claimed in claim 2, wherein the lug (14A) that is located away from the head (511) of the fastener (51) includes a first friction face (14A2) on an outside thereof, the washer (52) includes a second friction face (52A) which contacts the first friction face (14A2).

4. The securing device as claimed in claim 1, wherein a T-shaped adjustment member (41) is located within the adjustable area (141) and includes an installation portion (411), a fixed portion (412) extending from an underside of the installation portion (411), and a movable portion (413), the installation portion (411) includes a rail (414) and the movable portion (413) is movable along the rail (414), the movable portion (413) is parallel to the fixed portion (412) and movable relative to the fixed portion (412).

5. The securing device as claimed in claim 1, wherein a cylindrical tube (54) is connected to one of the two lugs (14A), the washer (52) and the nut (53) are accommodated in a room (542) defined in the cylindrical tube (54), the cylindrical tube (54) includes an opening which communicates with the room (542), a wrench (55) is located in the cylindrical tube (54) and engaged with the nut (53), a handle of the wrench (55) extends out from the opening of the cylindrical tube (54) so as to rotate the nut (53) relative to the fastener (51), a stop (541) extends inward from an inside of the cylindrical tube (54) and located close to the opening of the cylindrical tube (54) so as to stop the wrench (55) from dropping off from the cylindrical tube (54).

6. The securing device as claimed in claim 1, wherein a spring (56) is biased between the wrench (55) and the nut (53).
